# EUROPEAN PATENT SPECIFICATION

(11) **EP 0 613 276 B1**
(45) Date of publication and mention of the grant of the patent: **07.02.1996**
(21) Application number: 93103121.5
(22) Date of filing: 26.02.1993
(51) Int. Cl.: H04M 1/72

(54) **System for synchronisation of a plurality of transmitters**
Synchronisationsvorrichtung für eine Vielzahl von Funksendern
Système de synchronisation de plusieurs émetteurs radio

(43) Date of publication of application: 31.08.1994
(73) Proprietor: PEACOCK UK LIMITED, Daneshill, Basingstoke, Hants RG24 OUG (GB)
(72) Inventor: Boyd, Donald Bruce, Berks RG13 2DN (GB); Cole, Brian Andrew, Hants S023 7HD (GB)
(74) Representative: Grünecker, Kinkeldey, Stockmair & Schwanhäusser Anwaltssozietät

(56) References cited:
- EP-A- 0 064 686
- EP-A- 0 437 835
- EP-A- 0 466 139
- WO-A-92/10885
- GB-A- 2 138 652
- US-A- 5 134 710

## Description

The present invention relates to a digital cordless telephon system.

Large office buildings are normally connected to the public telephone network (PSTN) through a plurality of lines which are provided through one or a plurality of so-called PBX (private branch exchange) or PABX (private automatic branch exchange) units for a multitude of users for the purpose of telephone communication.

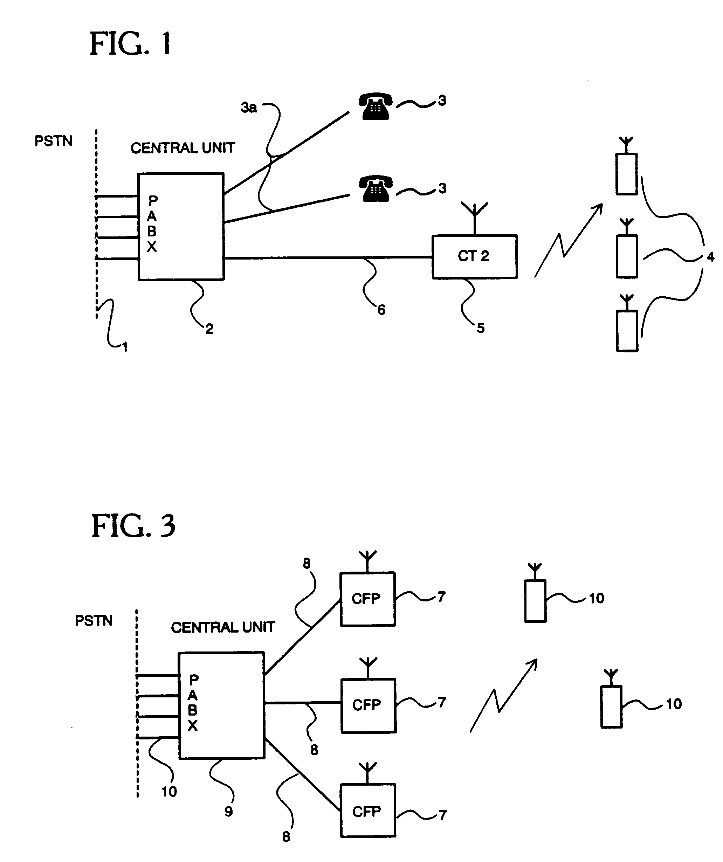

FIG. 1 shows such a PABX system in which a PABX unit 2 is connected via an interface 1 to the public telephone network (PSTN) and a plurality of telephones 3 are connected through corresponding lines 3a to the PABX unit.

To give the users of such a PABX system the additional possibility of wireless communication, systems of this type are often equipped with cordless telephones (e.g. based on the European ETSI CAI or English (T2 standard), thereby enabling the user (or users) of such a PABX unit to communicate with the aid of a carried handset 4 with a stationary base station 5, such as a CT2 base station, through which infeed to the PABX unit then takes place.

If the CT2 base station 5 is designed in such a way that it is simultaneously capable, as illustrated in FIG. 1, of communicating with a plurality of handsets 4 through use of a plurality of frequency channels, problems arise insofar as the individual channels may interfere with each other because of the same transmitting and receiving area. This may deteriorate the quality of a radio link or, in the worst case, break it off.

It is customary with CT2 systems to make use of a so-called "ping-pong" transmission technique for communication between a handset and a CT2 base station.

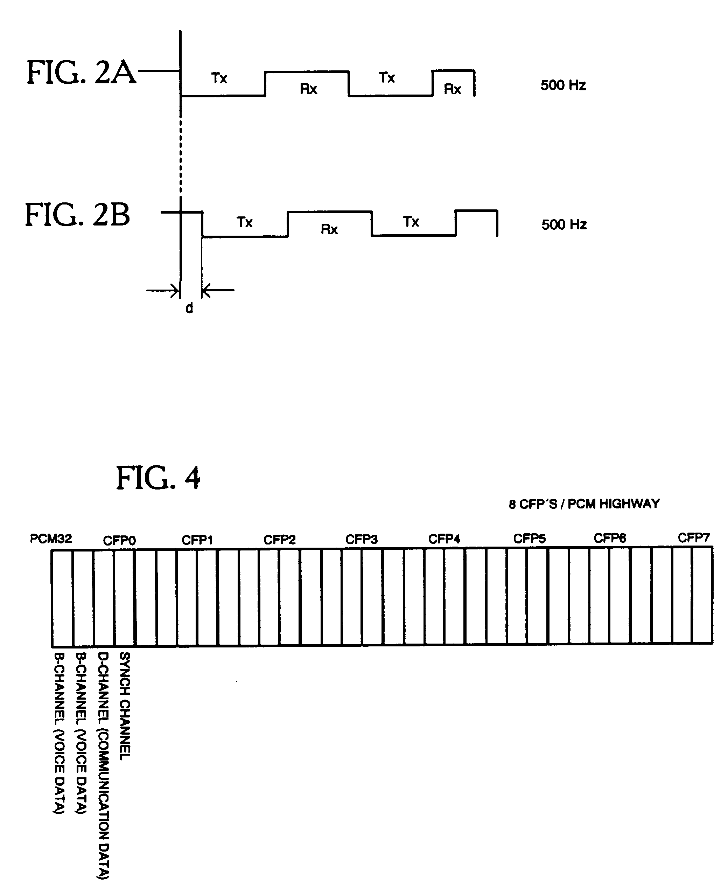

FIG. 2a is a time diagram illustrating this transmission technique. To avoid the provision of a respectively different channel frequency band for transmission from the base station to the handset and for transmission from the handset to the base station, a single frequency channel is used for the two transmission directions and divided in time in such a way that it is alternately employed for transmission and reception. Such a scheme is known as a TDD multiplexing. In FIG. 2a the intervals which are provided for transmission from the base station to a corresponding handset are designated by T_{X} and the corresponding retransmission intervals by R_{X}. Switching between these two transmission intervals can e.g. be carried out at a frequency of 500 Hz.

FIG. 2b is another time diagram illustrating such a bidirectional transmission between the base station and another handset. As can be gathered from FIG. 2b, the time diagram shown therein has a delay d in comparison with the time diagram of FIG. 2a. Such a delay d may occur in case of an imperfect synchronization between the radio channels. Hence, if no precautionary synchronization measures are taken, there is a risk that the time delay d constantly increases because of the different running times of the transmission between the CT2 base station and the corresponding handset. In the worst case it may happen that the base station must simultaneously transmit on one channel and receive on another channel. Since such a situation would be difficult to handle technically and since already slight deviations as to the switching times between the transmission intervals of the individual channels might cause serious interference or even break off a conversation, the individual channels of a base station must be synchronized with each other.

A suitable method is known from US-A-5 020 051. In this method the transmission between a handset and the base station is synchronized with the transmissions between the base station and other handsets by the corresponding handset transmitting a synchronization request to the base station and by the base station replying thereto by transmitting corresponding synchronization information to the handset, thereby enabling the handset to synchronize with the other transmissions.

GB-A-2 138 652 relates to a cordless telephone system in which several nodal stations serving as base stations are interconnected by a conveying cable means to achieve synchronization between each nodal station and the substations or handsets currently allocated to that nodal station. Communication between the nodal station and the substations is achieved by time division multiplex. In order to avoid that adjacent nodal stations interfere with each other when communicating with their allocated substations, different time slots are allocated to immediate neighboring nodal stations.

For the synchronization of each nodal station with its associated substations, a synchronizing frame is sequentially forwarded to each nodal station to enable each of the nodal stations to synchronize its allocated substations.

Interference between different nodal stations is avoided by allocating different time slots to neighboring cells in that neighboring cells do not communicate at the same time. Further it is mentioned that interference between neighboring cells may additionally be avoided by defining cell boundaries in accordance with existing walls which cause a sufficient attenuation of microwaves radiated in neighboring cells.

In WO-A-92 10 885 a radio system comprising several fixed base stations, BS1, BS2 and BS3, which are coupled by fixed connections to a mobile telephone exchange, MX, is described. Each base station is able to communicate with several mobile radio stations (MS1, MS2, MS3). Further, at least one frequency channel serving as a control channel is provided which is time-shared between several base stations for the transmission of control signalling. The further disclosure of this reference concerns a proposal in which manner a time-shared control channel may be more efficiently used, whereby it is suggested that the length of the signalling period assigned to a particular base station can be varied in accordance with the amount of signalling forwarded to the base station.

In EP-A-286 614 it is suggested to achieve synchronization between a time reference of a base station and time references of other base stations by receiving control signals sent from other base stations via the radio control channel and adjusting the internal time reference in accordance with the timing information derived from the received control information of other base stations. Since information between mobile units and base stations is transmitted in dedicated time slots of frames, a synchronization between the base stations is necessary, in order to be able to hand over a mobile unit from a present communication cell to a neighbor cell which is served by another base station.

A further TDMA-system is known from EP-A-437 835. In the described radio mobile communication system frame synchronization is provided to allow easy hand over of a mobile station from one service area to another.

From EP-A-064 686 a further TDMA-system is known in which means are provided which enable the mobile stations to synchronize with the base stations.

It is the object of the present invention to provide a communication system exhibiting a high interference immunity. In particular, it is the object of the present invention to provide a communication system which is suited for wireless communication inside a building and is hardly susceptible to interference and can be installed without great technical efforts and at small financial costs.

This object is attained through the subject matter of claim 1.

The telephone system according to claim 1 is especially suited for wireless communication inside buildings. It is ensured through the synchronization of all transmitter means that are connected to the central unit, which means may, e.g., be base stations, that not only the channels provided by a base station are synchronized with each other, but that the transmission channels of different base stations are also adapted to be synchronized with each other. Each base station receives its synchronization information via a synchronization line of its own from the central unit. The synchronizing operation has the effect that even slight deviations between the transmission intervals of different channels of different base stations can no longer be observed, whereby a high interference immunity is achievable. The system of the invention is also suited for simple and inexpensive installation in large buildings in which a multitude of telephones are normally connected via separate lines to a PABX unit. These connections that are already installed can further be used in the inventive system for connection between the base stations and the central unit.

In a preferred embodiment of the present invention, the voice data to be transmitted are supplied via each synchronization line to the corresponding base station, and also communication data that are needed for operating the system. This additionally simplifies the installation of the inventive system and also helps to reduce costs.

In another preferred embodiment the synchronization is not continuous or periodic, but is only performed in cases where a synchronizing operation has actually become necessary, which is e.g. the case when a new base station which has so far not been synchronized yet is put into operation.

In another preferred embodiment data is exchanged between the transmitter stations and the central unit according to a TDMA (time division multiple access) scheme. The transmission of information in a time-division multiplex technique is the standard technique in todays' communication systems and helps to make the inventive system compatible with existing systems.

In another embodiment the synchronization information is advantageously transmitted in a separate time slot to the base station.

In still another preferred embodiment it is possible to furnish information not only about a synchronizing operation which is to be carried out, but also about the time interval of said synchronization information relative to the synchronization information of other base stations which is transmitted in other time slots. As a result of this additional phase information, it is ensured that all base stations can actually perform a synchronizing operation at the same absolute time.

In another preferred embodiment the phase information in question may also include information about the phase shift relative to an externally predetermined reference signal.

A counter is preferably set according to the phase information upon receipt of the synchronization information. The resultant setting of each counter of a base station with a value corresponding to the individual phase shift has the effect that all base stations reach a predetermined value at the same time at which synchronization may then be carried out.

In a preferred embodiment the receiver means according to patent claim 1 are mobile or portable radio units. The system of the invention can then be used as a mobile radio system. It should however be noted that the present invention also relates to systems in which the receivers are stationary stations.

Finally, the inventive system according to a preferred embodiment is designed such that it can replace a branch exchange system installed already in a building. The branch exchange unit is here replaced and the already laid connection cables between PBX or PABX unit and the individual telephones can be used for transmission between the extended PBX or PABX unit and the base stations. This preferred embodiment of the present invention can therefore be installed in an especially inexpensive and simple way because only individual ones of the telephones have substantially to be replaced by base stations and the PABX unit must be replaced by a correspondingly extended PABX unit. One of the main expenses, i.e. the laying of the cables inside the building, does not arise twice.

A preferred embodiment of the invention shall now be explained in more detail with reference to the attached drawings, in which:
- FIG. 1: shows a conventional PABX unit;
- FIG. 2a and FIG. 2b: are time diagrams for illustrating the transmission technique used in the CT2 standard;
- FIG. 3: shows a preferred embodiment of the present invention; and
- FIG. 4: shows a data format for use in a preferred embodiment of the present invention.

In a preferred embodiment of the present invention it is of advantage to the establishment of wireless communication in buildings to replace a conventional PABX system (or PBX system) by an extended PABX system in which, as shown in FIG. 3, there are provided a multitude of base stations that are independent of each other and positioned at various places and communicate via an extended PABX unit with the public telephone network. The base stations 7 designated in FIG. 3 as CFP (cordless fixed parts) are connected via lines 8 to the extended PABX unit 9. By analogy with FIG. 1, the extended PABX unit is connected via a specific number of lines 10 to the public telephone network. In a preferred embodiment of the present invention this is to enable a plurality of handsets 10 to communicate with a respective one of the base stations 7.

In comparison with the assembly shown in FIG. 1, the preferred embodiment of the invention according to FIG. 3 is designed such that a handset 10 which serves as a subscriber device is not assigned from the start to a specific base station 7 (CFP), but is respectively allocated in response to the position of a handset user to the base station 7 that is presently the most advantageous one from the aspect of reception.

This means that a user who is moving inside the building is "handed over" to the next base station as soon as he is leaving the reception area of his instantaneous base station. This may take place in a way as is already known from cellular mobile radio systems. It is here ensured that at the beginning of the conversation the position of the corresponding handset user is known or can be determined, so that the communication can be initiated through that base station in whose reception area the user stays at the moment.

In the special embodiment of the present invention, which is shown in FIG. 3, an already existing conventional PABX system can be replaced in an inexpensive way in that the already existing connections 3a between a conventional PABX unit 2, as is shown in FIG. 1, and the subscriber devices (telephones 3) assume the function of the connections 8 between the base stations 7 and the extended PABX unit 9 of FIG. 3. Hence, during installation of the preferred embodiment of the present invention according to FIG. 3, only the PABX unit 2 has to be replaced by the extended PABX unit 9 and at least some of the subscriber devices 3 by base stations 7.

In the embodiment illustrated in FIG. 3, synchronization is not only possible between the channels of the same base station, but also beween the channels of different base stations according to the invention. Since the base stations are arranged at small distances from each other, in particular in buildings, and since their cellular radio areas overlap to a greater degree than is, e.g., the case with cellular mobile radio systems, such a synchronization between radio channels of different base stations is very important for ensuring a satisfactory transmission quality.

The inventive principle of synchronizing channels of different base stations with each other and of centrally initiating such a synchronization by a central unit (e.g. the extended PABX unit 9 of FIG. 3), as is described in more detail hereinafter, may also substantially improve the transmission quality and system reliability in other radio systems, in particular mobile radio systems.

The following text describes with reference to FIGS. 3 and 4 how a synchronization can be achieved between the channels of different base stations. However, it should once again be noted that this inventive synchronization can be used in every radio system having a plurality of base stations connected to a common central unit with which many users can communicate by means of corresponding remote units (fixed, portable or mobile), the transmission taking place during successive transmission intervals.

A preferred possibility of synchronizing the individual base stations and thus channels of different base stations shall be explained with reference to the preferred embodiment of FIG. 3 and the transmission format shown in FIG. 4.

FIG. 4 illustrates a frame with 32 time slots for transmission in TDMA technique. Transmission preferably takes place in the PCM format. Hence, the frame shown in FIG. 4 may, e.g., be a PCM 32 frame, as is outlined. The 32 time slots are divided into eight groups with four respective time slots, each group being allocated to a different base station (CFP). If a plurality of such PCM 32 frames are arranged side by side, a correspondingly increased number of base stations may exist. The four time slots of a group respectively carry the four types of information outlined in FIG. 4. The two first time slots are so-called B channels which are used for the transmission of voice data. The third time slot is the so-called D channel via which communication data are transmitted. Communication data are here data needed for operating the system, e.g., also in mobile radio systems. The fourth time slot serves to supply synchronization information needed by the base stations for the above-mentioned synchronization. Hence, the data format shown in FIG. 4 may, e.g., be passed on from the extended PABX unit 9 shown in FIG. 3 to the base station 7 (with FIG. 3 just illustrating three of the eight base stations that are possible). Each of the base stations preferably receives, through its line 8, only that part of the frame that is intended for said station, so that the whole data flow supplied by the extended PABX unit 9 is divided by a digital switch prior to output for distribution over the individual lines 8.

The transmission of synchronization information is of course not necessary in every frame, but only from time to time, and has necessarily to be carried out whenever a base station which is not synchronized yet is newly put into operation.

Hence, each of the base stations 7 of FIG. 3 is supplied by the extended PABX unit 9 with both the synchronization information and the voice data to be transmitted as well as the communication data required for operating the system via a common single line 8. As already explained above, this line may be a telephone line laid already in a building.

Since each of the base stations receives its synchronization information at another time than the other base stations in case of use of a TDMA format for data transmission from the extended PABX unit or, generally speaking from a central unit, to the base stations, it is necessary to take precautions that enable the base stations to carry out an exact synchronization despite reception of the synchronization information at respectively different times.

In a preferred embodiment this is achieved in that the transmitted synchronization information includes both sync opportunity information and information about the time delay of this sync information in comparison with the corresponding sync information of other base stations. This enables a base station which receives the synchronization information to detect with which time delay after receipt of the sync opportunity information synchronization is actually to be carried out.

Preferably upon receipt of the sync opportunity information, which may represent a single sync bit in the most simple case, the base station preloads a counter to a value defined by delay information which is additionally transmitted, and counts down the counter in the subsequent period. As a result, all base stations may reach a predetermined count, such as the count zero at which a synchronization can then be performed, at a uniform time on account of the different preloaded counts despite the different times at which they have received their synchronization information.

The phase information (delay information) which is additionally transmitted together with the sync opportunity information may also include information through which possibly different transmission times between the individual base stations and the central unit, e.g. due to different line lengths, can be taken into account for setting the synchronization time. Moreover, the synchronization operation may be matched such that synchronization is not only carried out between the base stations, but also with respect to a given reference signal.

The setting of the corresponding counters in accordance with the delay information transmitted in the synchronization time slot is preferably only carried out if sync opportunity information was received immediately before this operation. It is thus possible to continuously transmit the corresponding delay information, too, and to make the actual execution of the synchronization solely dependent on the transmission of the sync opportunity information or an individual sync bit.

## Claims

1. A digital cordless telephone system comprising several transmitter/receiver stations (7), each of which being located at a different site and able to transmit to and to receive from at least one handset (10) information via a radio channel,
said information being transmitted and received on each channel during consecutive transmission intervals via a single band of frequencies achieving a bidirectional communication by use of a time compression multiplexing technique,
said several radio channels are synchronized to each other in regard to the switching between said consecutive transmission intervals,
said system further comprises a central unit (9) connected to each of said transmitter/receiver stations by individual synchronization lines for providing synchronization information to each of said transmitter/receiver stations (7),
said synchronization information being used by each transmitter/receiver station to synchronize its switching between said consecutive transmission intervals to the switching of other transmitter/receiver stations.

2. A digital cordless telephone system according to claim 1 in which also voice data and communication data is transmitted via said synchronization lines.

3. A digital cordless telephone system according to Claim 1 or 2 in which said synchronization information is transmitted in a not continuously and not periodical manner.

4. A digital cordless telephone system according to one of the preceding claims wherein the central unit (9) communicates with the transmitter/receiver stations in a TDMA-scheme, thereby allocating at least one time slot to each transmitter/receiver station.

5. A digital cordless telephone system according to Claim 4 in which said central unit (9) communicates with the transmitter/receiver stations in a digital format, preferably a PCM-format.

6. A digital cordless telephone system according to Claim 4 or 5 wherein each transmitter/receiver station receives, within one of its allocated time slots and via its synchronization line, a synchronization opportunity information to derive synchronization therefrom.

7. A digital cordless telephone system according to Claim 6 wherein each transmitter station receives, in addition to the synchronization opportunity information, information on the phase difference between its own synchronization opportunity and the occurrence of the synchronization opportunity in at least one further transmitter/receiver station.

8. A digital cordless telephone system according to Claim 7 in which said phase information comprises information on the phase difference to a reference synchronization signal.

9. A digital cordless telephone system according to Claim 7 or 8 wherein said phase information is used in each transmitter/receiver station to preload after receipt of a respective synchronization opportunity information, a clock counter in that synchronization between all transmitter stations is achieved when each clock counter reaches a predetermined value.

10. A digital cordless telephone system according to Claim 9 wherein the counters are additionally preloaded by constants representing offset variations due to different transmission times between the central unit and the individual transmitter/receiver stations (7).

11. A digital cordless telephone system according to one of the preceding claims wherein said system is configured to replace a conventional PABX-system.

## Patentansprüche

1. Digitales, schnurloses Telefonsystem mit mehreren Sende-Empfangsstationen, von denen jede sich an einem unterschiedlichen Ort befindet und in der Lage ist, an zumindest ein Handset (10) Informationen über einen Funkkanal zu senden und entsprechend zu empfangen,
wobei die Information auf jedem Kanal während aufeinanderfolgenen Übertragungsintervallen übertragen und empfangen wird, und zwar über ein einzelnes Frequenzband, wobei eine bidirektionale Kommunikation durch Verwendung einer zeitkompressions-Multiplextechnik erreicht wird,
wobei die mehreren Funkkanäle miteinander bezüglich der Umschaltung zwischen aufeinanderfolgenden Übertragungsintervallen synchronisiert sind,
wobei das System weiterhin eine zentrale Einheit (9) aufweist, die mit jeder Sende-Empfangsstation über eine individuelle Synchronisationsleitung verbunden ist, um eine Synchronisationsinformation für jede Sende-Empfangsstation (7) zur Verfügung zu stellen,
wobei die Synchronisationsinformation von jeder Sende-Empfangs-station dazu verwendet wird, ihre Umschaltung zwischen aufeinanderfolgenden Übertragungsintervallen mit dem Umschalten anderer Sende-Empfangsstationen zu synchronisieren.

2. Digitales, schnurloses Telefonsystem nach Anspruch 1, bei dem auch Sprachdaten und Kommunikationsdaten über die Synchronisationsleitungen übertragen werden.

3. Digitales, schnurloses Telefonsystem nach Anspruch 1 oder 2, bei dem die Synchronisationsinformation in nicht kontinuierlicher und nicht periodischer Weise übertragen wird.

4. Digitales, schnurloses Telefonsystem bei einem der vorherigen Ansprüche, wobei die zentrale Einheit (9) mit den Sende-Empfangsstationen mittels eines TDMA-Schemas kommuniziert, wodurch zumindest Sende-Empfangsstation ein Zeitschlitz zugeordnet wird.

5. Digitales, schnurloses Telefonsystem nach Anspruch 4, bei dem die zentrale Einheit (9) mit den Sende-Empfangsstationen in digitalem Format kommuniziert, vorzugsweise in einem PCM-Format.

6. Digitales, schnurloses Telefonsystem nach Anspruch 4 oder 5, wobei jede Sende-Empfangsstation innerhalb eines ihrer zugewiesenen Zeitschlitze und über ihre Synchronisationsleitung eine Synchronistionsgelegenheitsinformation empfängt, um davon die Synchronisation abzuleiten.

7. Digitales, schnurloses Telefonsystem nach Anspruch 6, wobei jede Sendestation zusätzlich zu der Synchronisationsgelegenheitsinformation eine Information über phansenunterschiede zwischen seiner eigenen Synchronisationsgelegenheit und dem Auftreten der Synchronisationsgelegenheit bei zumindest einer weiteren Sende-Empfangsstation empfängt.

8. Digitales, schnurloses Telefonsystem nach Anspruch 7, bei dem die Phaseninformation Information über den Phasenunterschied zu einem Referenzsynchronisationssignal enthält.

9. Digitales, schnurloses Telefonsystem nach Anspruch 7 oder 8, wobei die Phaseninformation in jeder Sende-Empfangsstation verwendet wird, um nach Empfang einer entsprechenden Synchronisationsgelegenheitsinformation einen Zähler voreinzustellen, so daß eine Synchronisation zwischen allen übertragenen Stationen dann erreicht wird, wenn der Zähler einen bestimmten Wert erreicht.

10. Digitales, schnurloses Telefonsystem nach Anspruch 9, wobei die Zähler zusätzlich durch Konstanten voreingestellt werden, die Offset-Variationen aufgrund unterschiedlicher Übertragungszeiten zwischen der Zentraleinheit und den individuellen Sende-Empfangsstationen berücksichtigen.

11. Digitales, schnurloses Telefonsystem nach einem der vorhergehenden Ansprüche, wobei das System so ausgelegt ist, daß es ein herkömmliches PABX-System ersetzen kann.

## Revendications

1. Système numérique de téléphone sans fil comprenant plusieurs postes émetteurs/récepteurs (7), chacun d'eux étant situé à un site différent et capable d'émettre depuis et de recevoir d'au moins un combiné (10) une information via un canal radio,
- ladite information étant émise et reçue sur chaque canal durant des intervalles de transmission consécutifs via une bande unique de fréquences réalisant une communication bidirectionnelle en utilisant une technique de multiplexage par compression du temps,
- lesdits plusieurs canaux radio sont synchronisés entre eux en ce qui concerne la commutation entre lesdits intervalles de transmission consécutifs,
- ledit système comprend en outre une unité centrale (9) connectée à chacun desdits postes émetteurs/ récepteurs par des lignes de synchronisation individuelles pour fournir une information de synchronisation à chacun desdits postes émetteurs/ récepteurs (7),
- ladite information de synchronisation étant utilisée par chaque poste émetteur/récepteur pour synchroniser sa commutation entre lesdits intervalles de transmission consécutifs avec la commutation d'autres postes émetteurs/récepteurs.

2. Système numérique de téléphone sans fil selon la revendication 1 dans lequel des données vocales et des données de communication sont aussi transmises via lesdites lignes de synchronisation.

3. Système numérique de téléphone sans fil selon la revendication 1 ou 2 dans lequel ladite information de synchronisation est transmise d'une manière non continue et non périodique.

4. Système numérique de téléphone sans fil selon l'une des revendications précédentes dans lequel l'unité centrale (9) communique avec les postes émetteurs/ récepteurs dans une méthode TDMA, de manière à allouer au moins une tranche de temps à chaque poste émetteur/ récepteur.

5. Système numérique de téléphone sans fil selon la revendication 4 dans lequel ladite unité centrale (9) communique avec les postes émetteurs/récepteurs dans un format numérique, de préférence un format PCM.

6. Système numérique de téléphone sans fil selon la revendication 4 ou 5 dans lequel chaque poste émetteur/ récepteur reçoit, dans l'une de ses tranches de temps allouées et via sa ligne de synchronisation, une information d'opportunité de synchronisation pour déduire sa synchronisation de celle-ci.

7. Système numérique de téléphone sans fil selon la revendication 6 dans lequel chaque poste émetteur reçoit, en plus de l'information d'opportunité de synchronisation, une information sur la différence de phase entre sa propre opportunité de synchronisation et l'occurrence de l'opportunité de synchronisation dans au moins un autre poste émetteur/récepteur.

8. Système numérique de téléphone sans fil selon la revendication 7 dans lequel ladite information de phase comprend une information sur la différence de phase par rapport à un signal de synchronisation de référence.

9. Système numérique de téléphone sans fil selon la revendication 7 ou 8 dans lequel ladite information de phase est utilisée dans chaque poste émetteur/récepteur pour précharger, après réception d'une information d'opportunité de synchronisation respective, un compteur d'horloge de sorte que la synchronisation entre tous les postes émetteurs est réalisée lorsque chaque compteur d'horloge atteint une valeur prédéterminée.

10. Système numérique de téléphone sans fil selon la revendication 9 dans lequel les compteurs sont en plus préchargés par des constantes représentant des écarts de décalage dus à des temps de transmission différents entre l'unité centrale et les postes émetteurs/récepteurs (7) individuels.

11. Système numérique de téléphone sans fil selon l'une quelconque des revendications précédentes dans lequel la réalisation dudit système est réalisée pour remplacer un système PABX classique.
